# EUROPÄISCHE PATENTSCHRIFT

(11) **EP 1 128 448 B1**
(45) Veröffentlichungstag und Bekanntmachung des Hinweises auf die Patenterteilung: **29.11.2006**
(21) Anmeldenummer: 01200563.3
(22) Anmeldetag: 19.02.2001
(51) Int. Cl.: H01L 41/04, B26B 19/28

(54) **Elektrischer Schaltkreis zur Ansteuerung von piezoelektrischen Antrieben**
Electrical circuit for driving piezoelectric motors
Circuit de commande électrique de moteurs piézoélectriques

(30) Priorität: 25.02.2000 DE 10008937
(43) Veröffentlichungstag der Anmeldung: 29.08.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Morales Serrano, Francisco, Dr., Habsburgerallee, 11, 52064 Aachen (DE); Reichinger, Christian, Dr., Philips Corp. Intel., 52064 Aachen (DE)
(74) Vertreter: Volmer, Georg

(56) Entgegenhaltungen:
- EP-A- 0 924 778
- WO-A-98/38744
- US-A- 4 713 571
- US-A- 5 159 223
- US-A- 5 563 478
- PATENT ABSTRACTS OF JAPAN Bd. 015, Nr. 311 (E-1098), 8. August 1991 (1991-08-08) & JP 03 112379 A (MATSUSHITA ELECTRIC IND CO LTD), 13. Mai 1991 (1991-05-13)

## Beschreibung

Die Erfindung betrifft einen Schaltkreis für die Ansteuerung von einem piezoelektrischen Antrieb.

Der Einsatz von piezoelektrischen Antrieben erfordert zum Betrieb eine Wechselspannung mit einer bestimmten Frequenz. Diese Frequenz muss die gewünschte Resonanz des piezoelektrischen Antriebs anregen. Dabei liegt die optimale Ansteuerfrequenz in der Nähe der mechanischen Resonanzfrequenz des piezoelektrischen Antriebs. Ein solcher elektrischer Schaltkreis zur Ansteuerung piezoelektrischer Antriebe ist in der Patentschrift.
US-A 5013982 beschrieben. Dabei geht es um das Betreiben eines piezoelektrischen Antriebs, insbesondere eines Wanderwellenmotors, mit zwei angelegten Wechselspannungen. Der eingesetzte elektrische Schaltkreis dient dabei der Steuerung der Frequenz und des Phasenwinkels der Antriebsspannung des piezoelektrischen Antriebs. Damit wird die Geschwindigkeit des Antriebs geregelt.

Aus der US 5,563 478 ist eine Antriebskontrollsteuerung für einen Ultraschallmotor bekannt, bei welcher mittels einer phasensensitiven Steuerung, die Anregung des Motors immer mit seiner mechanischen Resonanzfrequenz erfolgt. Für den Fall, dass eine Phasenverschiebung zwischen Anregung und Schwingfrequenz des Antriebes erfasst wird, wird dies lediglich zur Auswertung einer Abweichung vom koinzidenten resonanten Schwingungsverhalten bewertet und entsprechend wieder auf die gleichgetaktete Anregung korrigiert. Dies hat zwar zu Folge, dass der Motor, bzw der Schwinger stets in Resonanz gehalten wird. Dabei ist aber der energetische Wirkungsgrad der Energieübertragung vom Piezoanreger zum Motor nur klein.

Es ist Aufgabe der vorliegenden Erfindung, einen piezoelektrischen Antrieb mit einem elektrischen Schaltkreis der Art anzusteuern, dass der optimale Arbeitspunkt und damit der höchstmögliche Wirkungsgrad des piezoelektrischen Antriebs unabhängig von sich verändernden Parametern wie Temperatur und Belastung des piezoelektrischen Antriebs eingehalten wird, um so den Wirkungsgrad des piezoelektrischen Antriebs zu erhöhen. Gleichzeitig soll ein einfach und kostengünstig zu realisierender elektrischer Schaltkreis zur Ansteuerung des piezoelektrischen Antriebs geschaffen werden, der unkompliziert an unterschiedliche piezoelektrische Antriebe anzupassen ist.

Die Aufgabe wird erfindungsgemäß dadurch gelöst, dass ein Ausgangssignal einer ersten Messschaltung an einem ersten Eingang eines Phasendetektors anliegt, dass ein Ausgangssignal einer Logikschaltung oder ein Ausgangssignal einer zweiten Messschaltung an einem zweiten Eingang des Phasendetektors anliegt, dass ein zweites Ausgangssignal der Logikschaltung als Eingangssignal an einer Endstufe anliegt, welche dazu vorgesehen ist, den piezoelektrischen Antrieb mit einer Wechselspannung zu versorgen, dass ein Loop Filter das Ausgangssignal des Phasendetektors verarbeitet und ein Stellsignal an einen spannungsgesteuerten Oszillator abgibt, welcher sein Ausgangssignal am Eingang der Logikschaltung bereitstellt und dass ein Verzögerungsglied dazu vorgesehen ist, die Frequenz des optimalen Arbeitspunkts und Wirkungsgrads des angesteuerten piezoelektrischen Antriebs derart einzustellen, dass sich eine eingestellte Abweichung vom Phasennulldurchgang ergibt.

Hierdurch wird erreicht, dass der piezoelektrische Antrieb ständig und während seiner gesamten Lebensdauer mit dem größtmöglichen Wirkungsgrad arbeitet. Dies spart bei gleicher abgegebener Leistung elektrische Energie und verkleinert das Bauvolumen. Außerdem senkt ein erhöhter Wirkungsgrad die Verlustleistung, was wiederum die Lebensdauer des piezoelektrischen Antriebs erhöht.

Des weiteren ist eine Messschaltung nach Anspruch 2 vorgesehen. Diese Messschaltung ermöglicht es, die Phasennulldurchgänge und damit die Phasenlage der Spannung an einer Sensorelektrode auf dem piezoelektrischen Resonator zu detektieren.

Alternativ ist eine Messschaltung nach Anspruch 3 vorgesehen. Diese Messschaltung ermöglicht es, die Phasennulldurchgänge und damit die Phasenlage des Stroms durch den piezoelektrischen Antrieb auf eine andere Art zu detektieren.

Die Ausgestaltung nach Anspruch 4 hat eine kostengünstigere aber dennoch zuverlässige Erfassung der Phasenlage des Stroms durch den piezoelektrischen Antrieb zum Vorteil. Hier kann auf den bei der Ausgestaltung nach Anspruch 3 notwendigen Operationsverstärker verzichtet werden.

Alternativ ermöglicht die Ausgestaltung nach Anspruch 5 ebenfalls eine Erfassung der Phasenlage des Stroms durch den piezoelektrischen Antrieb durch zwei antiparallele Dioden.

In Anspruch 6 ist eine Ausgestaltung der zweiten Messschaltung vorgesehen. Diese Messschaltung ermöglicht es, die Phasennulldurchgänge und damit die Phasenlage der angelegten Spannung an den piezoelektrischen Antrieb zu detektieren.

Die Ausgestaltungen nach den Ansprüchen 7 und 8 erlauben es, dem Regelkreis einen bestimmten Betriebspunkt (Frequenz-Offset) bezüglich der Resonanzfrequenz des piezoelektrischen Antriebes vorzugeben. Beide Realisierungen einer eingebauten Verzögerung sind technisch gleichwertig. Das Verzögerungsglied sorgt für die Einstellung des optimalen Arbeitspunkts, welcher bei einer Frequenz etwas neben der Resonanzfrequenz des piezoelektrischen Antriebes liegt. Die Lage der Resonanzfrequenz des piezoelektrischen Antriebes kann durch die Lage des Phasennulldurchgangs der Spannung der ersten Messschaltung bezüglich der Lage des Phasennulldurchgangs der Ausgangsspannung der Logikschaltung oder der Lage des Phasennulldurchgangs der an den piezoelektrischen Antrieb angelegten Spannung gefunden werden. Je nach Totzeit des Verzögerungsglieds lässt sich die Phasendifferenz der beiden zur Detektierung der Resonanzfrequenz der piezoelektrischen Antriebes verwendeten Signale verschieben.

In einer weiteren Ausgestaltung nach den Ansprüchen 9 und 10 befindet sich ein Frequenzteiler im Zweig zwischen Logikschaltung und Phasendetektor. Dieser Frequenzteiler dividiert das eine Ausgangssignal der Logikschaltung durch eine natürliche Zahl. Dies bietet den Vorteil, dass die Anregungsfrequenz der Endstufe ein mehrfaches über der Arbeitsfrequenz des Regelkreises liegen kann, wodurch Verluste durch Verzerrungen von Oberwellenschwingungen in der Endstufe verringert werden.

Insbesondere ist vorgesehen, den elektrischen Schaltkreis nach einem der Ansprüche 1 bis 10 in einen elektrischen Rasierapparat einzubauen, um den piezoelektrischen Antrieb der Schneidwerkzeuge zu regeln.

Bei diesem kompakten Elektrogerät kommen die positiven Auswirkungen eines hohen Wirkungsgrads besonders zum Tragen, da ein effizienter Antrieb ein geringes Bauvolumen ermöglicht. Mit der reduzierten elektrischen Leistungsaufnahme wird außerdem der Stromverbrauch gesenkt, was insbesondere bei mit Akkus betriebenen Rasierapparaten von Bedeutung ist, da so ein längeres netzunabhängiges Rasieren möglich ist oder die Kapazität des Akkus kleiner und dieser damit ein geringeres Gewicht aufweisen kann.
Mehrere Ausführungsbeispiele der Erfindung werden nachfolgend an Hand von acht Figuren erläutert.

Es zeigen:
Figur 1 ein Blockschaltbild eines ersten Schaltkreises zur Ansteuerung eines piezoelektrischen Antriebs,
Figur 2 ein Blockschaltbild eines zweiten Schaltkreises zur Ansteuerung eines piezoelektrischen Antriebs,
Figur 3 ein Blockschaltbild eines dritten Schaltkreises zur Ansteuerung eines piezoelektrischen Antriebs,
Figur 4 ein Schaltbild einer ersten Messschaltung zur Erfassung der Phase des Stroms durch den piezoelektrischen Antrieb,
Figur 5 ein Schaltbild einer zweiten Messschaltung zur Erfassung der Phase des Stroms durch den piezoelektrischen Antrieb,
Figur 6 ein Schaltbild einer dritten Messschaltung zur Erfassung der Phase des Stroms durch den piezoelektrischen Antrieb,
Figur 7 ein Schaltbild einer vierten Messschaltung mit Sensoren auf dem piezoelektrischen Antrieb und
Figur 8 ein schematisches Schaubild eines elektrischen Rasierapparates mit einem erfindungsgemäßen Schaltkreis.

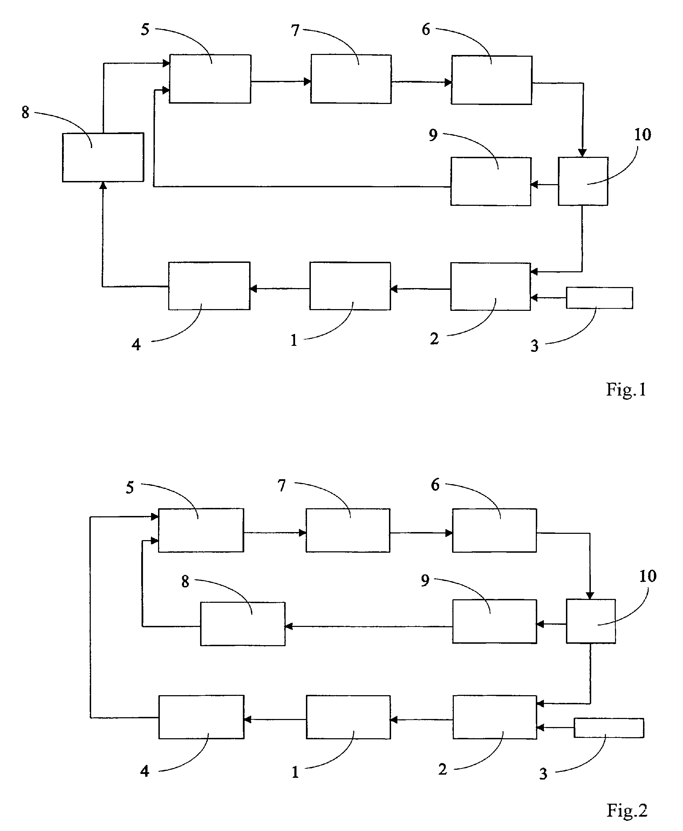

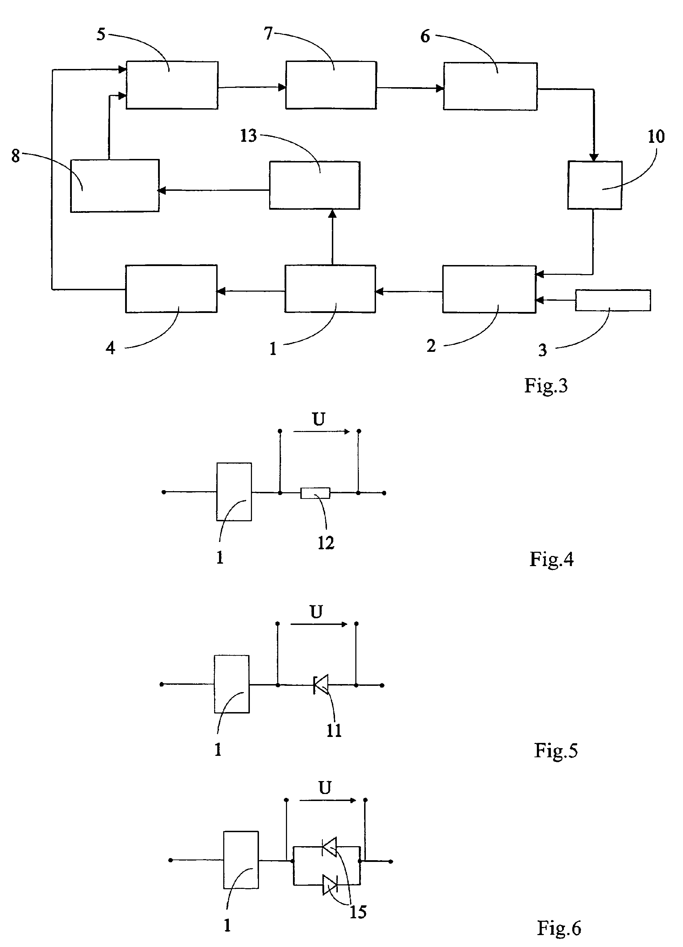

Der Schaltkreis in Figur 1 und der Schaltkreis in Figur 2 weisen beide dieselben Bauelemente auf und unterscheiden sich nur in ihrer Anordnung. Auch mit dem Schaltkreis nach Figur 3 wird der Betrieb eines piezoelektrischen Antriebs 1 gesteuert.

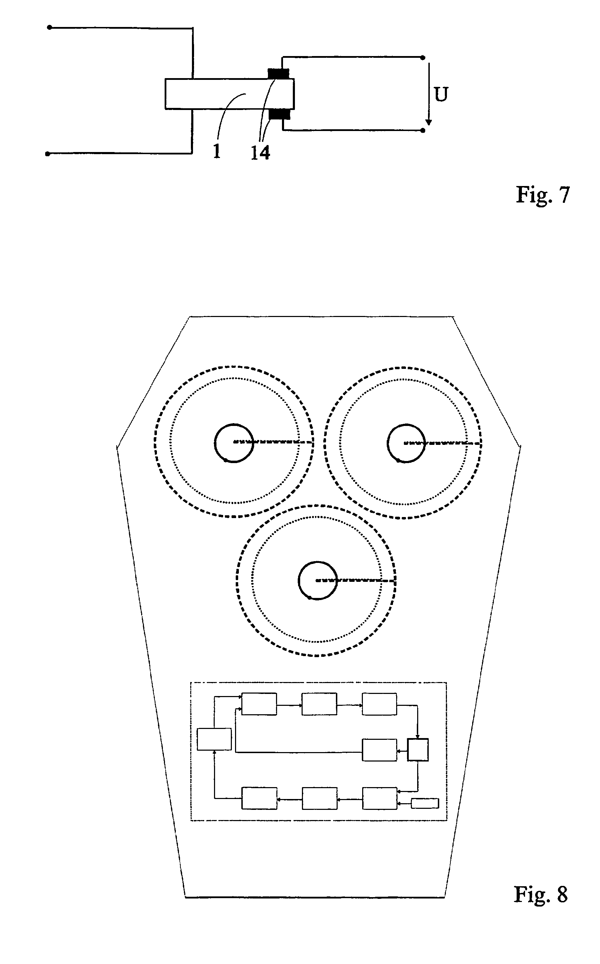

Grundsätzlich wird der piezoelektrische Antrieb 1 von einer Endstufe 2 mit der nötigen Spannung und elektrischen Leistung versorgt, wobei die Endstufe 2 von einer Gleichspannungsquelle 3 wie z.B. einer Batterie oder einem Akku gespeist wird. Weiterhin enthalten die Schaltkreise eine Messschaltung 4 zur Erfassung der Phase des Stroms durch den piezoelektrische Antrieb 1 oder zur Erfassung der Phase einer Messspannung an einer speziellen Sensorelektrode 14 auf dem piezoelektrischen Antrieb 1 wie in Figur 7 dargestellt. Auf der Oberfläche des piezoelektrischen Antriebs 1 sind Elektroden 14 angebracht, welche eine Spannung abgeben. Diese Spannung wird mit einem hier nicht gezeigten Operationsverstärker für den Regelkreis aufbereitet.

Für den Fall der Erfassung der Stromphase ist die Messschaltung 4 in den Figuren 4 bis 6 näher dargestellt. Es ist der Einsatz einer Messimpedanz 12 wie in Figur 4 möglich. Die Messimpedanz 12 ist in Reihe mit dem piezoelektrischen Antrieb 1 geschaltet. Da die Messimpedanz 12, um elektrische Verluste zu vermeiden, sehr niederohmig sein muss, wird die über der Messimpedanz 12 anliegende Spannung in einem hier ebenfalls nicht gezeigten Operationsverstärker verstärkt und an den einen Eingang des Phasendetektors 5 ausgegeben. Die zweite Messschaltung nach Figur 5 beinhaltet eine Zener-Diode 11, welche mit dem piezoelektrischen Antrieb 1 in Reihe liegt. Da die Diode 11 erst ab einer bestimmten anliegenden Spannung durchlässig ist, lassen sich auch hiermit die Phasennulldurchgänge ermitteln. Die Spannung über der Zener-Diode 11 wird ebenfalls dem einen Eingang des Phasendetektors 5 zugeführt. Da hier kein Operationsverstärker nötig ist, ist diese Lösung besonders preisgünstig. Eine weitere Möglichkeit die Phase des Stroms durch den piezoelektrischen Antrieb 1 zu ermitteln, ist die Messschaltung nach Figur 6. Sie beinhaltet eine Antiparallelschaltung von Dioden 15. Der Strom fließt durch diese Antiparallelschaltung und erzeugt einen Spannungsabfall. Dieser geringe Spannungsabfall wird über einen Differenzverstärker, im einfachen Fall wieder ein Operationsverstärker, dem ersten Eingang des Phasendetektors 5 zugeführt.

Die so gemessene Phase des Stroms durch den piezoelektrische Antrieb 1 kann zusammen mit der Phase der über eine Messschaltung (13) erfassten angelegten Spannung des piezoelektrische Antriebs 1 einem Phasendetektor 5 direkt zugeführt werden. Dies ist im Schaltkreis nach Figur 3 der Fall. In den Schaltkreisen nach Figur 1 und 2 wird die Spannung des piezoelektrischen Antriebs 1 nicht direkt dem Phasendetektor 5 zugeführt, sondern die an einem Ausgang einer Logikschaltung 10 anliegende Ausgangsspannung abgegriffen. In diesem Fall muss die Phasendifferenz zur tatsächlichen Phase der angelegten Spannung am piezoelektrischen Antrieb 1 in Abhängigkeit der Frequenz, der Antriebsbelastung und des konkreten Designs des Schaltkreises berücksichtigt und korrigiert werden. Aufgabe der Logikschaltung 10 ist es, eine hier nicht gezeigte Brückenschaltung in der Endstufe 2 zu steuern, mit der die angelegte Spannung des piezoelektrischen Antriebs 1 hinsichtlich Amplitude und Frequenz verändert werden kann.

Der Ausgang des Phasendetektors 5 wird in einer Regelschleife eines Loop Filters 7 verarbeitet. Das Loop Filter 7 besteht aus passiven Bauelementen wie Widerständen und Kapazitäten, wobei die Polstellen und Nullstellen der Übertragungsfunktion des Loop Filters 7 an den jeweiligen Schaltkreis angepasst werden müssen. Der Ausgang des Loop Filters 7 steuert wiederum den spannungsgesteuerten Oszillator 6 und die sich daran anschließende Logikschaltung 10.

Um den optimalen Wirkungsgrad des piezoelektrischen Antriebs 1 einzustellen, welcher als Arbeitspunkt unterhalb oder oberhalb einer Phasendifferenz von 0 Grad zwischen den beiden Eingangssignalen des Phasendetektors 5 liegt, besitzen die Schaltkreise nach den Figuren 1 bis 3 ein Verzögerungsglied 8. Dieses kann wie in Figur 1 zwischen der Messschaltung 4 und dem ersten Eingang des Phasendetektors 5 oder wie in Figur 2 im Zweig zwischen dem einen Ausgang der Logikschaltung 10, einem eventuell vorhandenen Frequenzteiler 9 und dem zweiten Eingang des Phasendetektors 5 eingefügt sein. Bei dem Schaltkreis nach Figur 3 befindet sich das Verzögerungsglied 8 zwischen der zweiten Messschaltung 13 und dem zweiten Eingang des Phasendetektors 5. Das Verzögerungsglied 8 sorgt für die gewünschte, eingestellte Abweichung vom Phasennulldurchgang. Diese Abweichung hat sich als der Arbeitspunkt für einen optimalen Wirkungsgrad des piezoelektrischen Antriebs 1 erwiesen.

Um harmonische Verzerrungen von Oberwellen zu vermeiden, ist es sinnvoll, die Endstufe 2 mit einer im Verhältnis zur Frequenz des Antriebs 1 mehrfach, insbesondere 6-fach, höheren Frequenz zu betreiben. In diesem Fall ist im Kopplungszweig zwischen dem einen Ausgang der Logikschaltung 10 und dem zweiten Eingang des Phasendetektors 5 ein Frequenzteiler 9 vorzusehen. Wird die Endstufe 2 mit der normalen Arbeitsfrequenz des piezoelektrischen Antriebes 1 betrieben, ist der Frequenzteiler 9 nicht erforderlich.

Da der erfindungsgemäße Schaltkreis den Wirkungsgrad des piezoelektrischen Antriebs 1 erhöht, kann die an den piezoelektrischen Antrieb 1 angelegte Betriebsspannung gesenkt werden. Gleichzeitig verbraucht der piezoelektrische Antrieb 1 weniger Strom. Diese beiden Eigenschaften bedeuten einen günstigeren Energieverbrauch bei der gleichen mechanischen Last, wodurch der erfindungsgemäße Schaltkreis besonders für netzunabhängige Elektrogeräte wie z.B. elektrische Rasierapparate geeignet ist, da sich bei geringerem Energieverbrauch kleinere und leichtere Akkus verwenden lassen, wodurch die Handhabung des Rasierapparates erleichtert wird. Bei gleicher Akkukapazität lässt sich alternativ die mögliche Rasierdauer steigern, wenn dies gewünscht ist. So zeigt Figur 8 schematisch einen in einen Rasierapparat integrierten erfindungsgemäßen Schaltkreis.

## Patentansprüche

1. Schaltkreis für die Ansteuerung von einem piezoelektrischen Antrieb (1), bei dem
ein Ausgangssignal einer ersten Messschaltung (4) an einem ersten Eingang eines Phasendetektors (5) anliegt,
ein Ausgangssignal einer Logikschaltung (10) oder ein Ausgangssignal einer zweiten Messschaltung (13) an einem zweiten Eingang eines Phasendetektors (5) anliegt,
ein zweites Ausgangssignal der Logikschaltung (10) als Eingangssignal an einer Endstufe (2) anliegt, welche dazu vorgesehen ist, den piezoelektrischen Antrieb (1) mit einer Wechselspannung zu versorgen, wobei
ein Loop Filter (7) das Ausgangssignal des Phasendetektors (5) verarbeitet und ein Stellsignal an einen spannungsgesteuerten Oszillator (6) abgibt, welcher sein Ausgangssignal am Eingang der Logikschaltung (10) bereitstellt und ein Verzögerungsglied (8) dazu vorgesehen ist, die Frequenz des optimalen Arbeitspunktes und Wirkungsgrads des angesteuerten piezoelektrischen Antriebs (1) einzustellen, **dadurch gekennzeichnet, dass** die Frequenz des optimalen Arbeitspunktes und Wirkungsgrads des angesteurten piezoelektrischen Antriebs derart eingestellt wird, dass sich eine eingestellte Abweichung vom Phasennulldurchgang ergibt.

2. Schaltkreis nach Anspruch 1,
**dadurch gekennzeichnet,**
**dass** in der ersten Messschaltung (4) die Spannung mittels einer Sensorelektrode (14) auf dem piezoelektrischen Antrieb (1) erfasst wird und das erste Eingangssignal des Phasendetektors (5) ist.

3. Schaltkreis nach Anspruch 1,
**dadurch gekennzeichnet,**
**dass** in der ersten Messschaltung (4) der Strom des piezoelektrischen Antriebs (1) eine Messimpedanz (12) durchfließt und die an der Messimpedanz anliegende verstärkte Spannung das erste Eingangssignal des Phasendetektors (5) ist.

4. Schaltkreis nach Anspruch 1,
**dadurch gekennzeichnet,**
**dass** in der ersten Messschaltung (4) der Strom des piezoelektrischen Antriebs (1) eine Zener-Diode (11) durchfließt und die an der Zener-Diode (11) anliegende Spannung das erste Eingangssignal des Phasendetektors (5) ist.

5. Schaltkreis nach Anspruch 1,
**dadurch gekennzeichnet,**
**dass** in der ersten Messschaltung (4) der Strom des piezoelektrischen Antriebs (1) zwei antiparallelgeschaltete Dioden (15) durchfließt und die an den Dioden (15) anliegende verstärkte Spannung das erste Eingangssignal des Phasendetektors (5) ist.

6. Schaltkreis nach Anspruch 1,
**dadurch g**ekennzeichnet,
dass in der zweiten Messschaltung (13) die am piezoelektrischen Antrieb (1) anliegende Spannung gemessen wird.

7. Schaltkreis nach Anspruch 1,
**dadurch gekennzeichnet,**
**dass** das Verzögerungsglied (8) das Ausgangssignal der ersten Messschaltung (4) verzögert.

8. Schaltkreis nach Anspruch 1,
**dadurch gekennzeichnet,**
**dass** das Verzögerungsglied (8) das Ausgangssignal der Logikschaltung (10) im Zweig zwischen Logikschaltung (10) und dem zweiten Eingang des Phasendetektors (5) oder das Ausgangssignal der zweiten Messschaltung (13) verzögert.

9. Schaltkreis nach Anspruch 1,
**dadurch gekennzeichnet,**
**dass** ein Frequenzteiler (9) im Zweig zwischen dem einen Ausgang der Logikschaltung (10) und dem zweiten Eingang des Phasendetektors (5) vorgesehen ist.

10. Schaltkreis nach Anspruch 1,
**dadurch gekennzeichnet,**
**dass** ein Frequenzteiler (9) mit nachgeschaltetem Verzögerungsglied (8) im Zweig zwischen dem einem Ausgang der Logikschaltung (10) und dem zweiten Eingang des Phasendetektors (5) vorgesehen ist.

11. Elektrisch betriebener Rasierapparat mit einem Elektromotor und Mitteln für die Ansteuerung des Elektromotors,
**dadurch gekennzeichnet,**
**dass** der Motor ein piezoelektrischer Antrieb (1) und die Mittel zur Ansteuerung des Motors ein Schaltkreis nach einem der Ansprüche 1 bis 10 ist.

## Claims

1. A circuit for the control of a piezoelectric drive (1), in which
an output signal of a first measurement circuit (4) is applied to a first input of a phase detector (5),
an output signal of a logic circuit (10) or an output signal of a second measurement circuit (13) is applied to a second input of the phase detector (5),
a second output signal of the logic circuit (10) is applied as an input signal to a final stage (2) which serves to supply an alternating voltage to the piezoelectric drive (1),
a loop filter (7) processes the output signal of the phase detector (5) and supplies a control signal to a voltage-controlled oscillator (6), whose output signal is supplied to the input of the logic circuit (10), and a delay element (8) is provided to adjust the frequency of the optimum operating point and efficiency of the controlled piezoelectric drive (1), **characterized in that** the frequency of the optimum operating point and efficiency of the controlled piezoelectric drive is adjusted in such a manner that an adjusted offset from the phase zero crossing is the result.

2. A circuit as claimed in claim 1, **characterized in that** the voltage is detected in the first measurement circuit (4) by means of a sensor electrode (14) on the piezoelectric drive (1) and is the first input signal of the phase detector (5).

3. A circuit as claimed in claim 1, **characterized in that**, in the first measurement circuit (4), the current of the piezoelectric drive (1) flows through a measurement impedance (12) and the amplified voltage across the measurement impedance is the first input signal of the phase detector (5).

4. A circuit as claimed in claim 1, **characterized in that**, in the first measurement circuit (4), the current of the piezoelectric drive (1) flows through a zener diode (11) and the voltage across the zener diode (11) is the first input signal of the phase detector (5).

5. A circuit as claimed in claim 1, **characterized in that**, in the first measurement circuit (4), the current of the piezoelectric drive (1) flows through two antiparallel arranged diodes (15) and the amplified voltage across the diodes (15) is the first input signal of the phase detector (5).

6. A circuit as claimed in claim 1, **characterized in that**, in the second measurement circuit (13), the voltage applied to the piezoelectric drive (1) is measured.

7. A circuit as claimed in claim 1, **characterized in that** the delay element (8) delays the output signal of the first measurement circuit (4).

8. A circuit as claimed in claim 1, **characterized in that** the delay element (8) delays the output signal of the logic circuit (10) in the branch between the logic circuit (10) and the second input of the phase detector (5), or the output signal of the second measurement circuit (13).

9. A circuit as claimed in claim 1, **characterized in that** a frequency divider (9) is included in the branch between the one output of the logic circuit (10) and the second input of the phase detector (5).

10. A circuit as claimed in claim 1, **characterized in that** a frequency divider (9) followed by a delay element (8) is included in the branch between the one output of the logic circuit (10) and the second input of the phase detector (5).

11. An electrically powered shaver having an electric motor and means for controlling the electric motor, **characterized in that** the motor is a piezoelectric drive (1) and the means for controlling the motor is a circuit as claimed in any one of claims 1 to 10.

## Revendications

1. Circuit de commande d'un moteur piézo-électrique (1) pour lequel
un signal de sortie d'un premier montage de mesure (4) est présent à la première entrée d'un détecteur de phases (5),
un signal de sortie d'un circuit logique (10) ou un signal de sortie d'un deuxième montage de mesure (13) est présent à la deuxième entrée d'un détecteur de phases (5),
un deuxième signal de sortie du circuit logique (10) fait office de signal d'entrée à un étage final (2) prévu pour alimenter le moteur piézo-électrique (1) avec une tension alternative, auquel cas
un filtre de boucle (7) traite le signal de sortie du détecteur de phases (5) et émet un signal de commande à un oscillateur commandé en tension (6) appliquant son signal de sortie à l'entrée du circuit logique (10) et un circuit de retard (8) est prévu pour régler la fréquence du point de fonctionnement dynamique optimal et du rendement du moteur piézo-électrique (1),
**caractérisé en ce que**,
la fréquence du point de fonctionnement dynamique optimal et du rendement du moteur piézo-électrique commandé est réglée de manière à créer une divergence contenue du passage à zéro de la phase.

2. Circuit de commande conforme à la revendication 1,
**caractérisé en ce que**,
la tension est détectée à l'aide d'une électrode de capteur (14) située sur le moteur piézo-électrique (1) dans le premier montage de mesure (4) et correspond au premier signal d'entrée du détecteur de phases (5).

3. Circuit de commande conforme à la revendication 1,
**caractérisé en ce que**,
le courant du moteur piézo-électrique (1) traverse une impédance de mesure (12) dans le premier montage de mesure (4) et que la tension amplifiée à l'impédance de mesure correspond au premier signal d'entrée du détecteur de phases (5).

4. Circuit de commande conforme à la revendication 1,
**caractérisé en ce que**,
le courant du moteur piézo-électrique (1) traverse une diode Zener (11) dans le premier montage de mesure (4) et que la tension présente à la diode Zener (11) correspond au premier signal d'entrée du détecteur de phases (5).

5. Circuit de commande conforme à la revendication 1,
**caractérisé en ce que**,
le courant du moteur piézo-électrique (1) traverse deux diodes antiparallèles (15) et que la tension amplifiée aux diodes correspond au premier signal d'entrée du détecteur de phases (5).

6. Circuit de commande conforme à la revendication 1,
**caractérisé en ce que**,
la tension présente au moteur piézo-électrique (1) est mesurée dans le deuxième montage de mesure (13).

7. Circuit de commande conforme à la revendication 1,
**caractérisé en ce que**,
le circuit de retard (8) retarde le signal de sortie du premier montage de mesure (4).

8. Circuit de commande conforme à la revendication 1,
**caractérisé en ce que**,
le circuit de retard (8) retarde le signal de sortie du circuit logique (10) à l'embranchement entre le circuit logique (10) et la deuxième entrée du détecteur de phases (5) ou le signal de sortie du deuxième montage de mesure (13).

9. Circuit de commande conforme à la revendication 1,
**caractérisé en ce que**,
un démultiplicateur de fréquences (9) est prévu à l'embranchement entre la sortie du circuit logique (10) et la deuxième entrée du détecteur de phases (5).

10. Circuit de commande conforme à la revendication 1,
**caractérisé en ce que**,
un démultiplicateur de fréquences (9) muni d'un circuit de retard (8) intercalé à la suite est prévu à l'embranchement entre la sortie du circuit logique (10) et la deuxième entrée du détecteur de phases (5).

11. Rasoir électrique doté d'un moteur électrique et d'éléments de commande du moteur électrique,
**caractérisé en ce que**,
le moteur est un moteur piézo-électrique (1) et que les éléments de commande du moteur constituent un circuit de commande conformément à une des revendications 1 à 10.
